# EUROPÄISCHE PATENTSCHRIFT

(11) **EP 0 400 301 B1**
(45) Veröffentlichungstag und Bekanntmachung des Hinweises auf die Patenterteilung: **29.12.1993**
(21) Anmeldenummer: 90106412.1
(22) Anmeldetag: 04.04.1990
(51) Int. Cl.: B60G 17/015, B60G 17/052

(54) **Niveauregeleinrichtung für Fahrzeuge**
Height control device for vehicles
Dispositif de réglage d'assiette pour véhicules

(30) Priorität: 30.05.1989 DE 3917458
(43) Veröffentlichungstag der Anmeldung: 05.12.1990
(73) Patentinhaber: WABCO Vermögensverwaltungs-GmbH, D-30432 Hannover (DE)
(72) Erfinder: Gradert, Detlef, D-3101 Nienhagen (DE)
(74) Vertreter: Schrödter, Manfred, Dipl.-Ing.

(56) Entgegenhaltungen:
- EP-A- 0 263 346
- EP-A- 0 301 225
- DE-A- 3 031 453
- US-A- 4 718 695

## Beschreibung

Die Erfindung betrifft eine Niveauregeleinrichtung für Fahrzeuge mit Luftfedern durch die eine Fahrzeugzelle gegenüber mindestens einer Fahrzeugachse abgefedert ist, gemäß dem Oberbegriff des Patentanspruchs 1.

Eine derartige Niveauregeleinrichtung ist durch die DE-OS 30 31 453 vorbekannt.

Wenn bei Einrichtungen der vorbekannten Art das üblicherweise elektrisch betätigbare Absperr- oder Wegeventil, das gewöhnlich über ein Druckleitung direkt mit der Luftfeder verbunden ist als Sitzventil in der Art ausgebildet ist, daß der Luftdruck der Luftfeder als Schließdruck auf das Sitzventil wirkt, dann wird in vorteilhafter Weise verhindert, daß dynamisch bedingte Druckänderungen durch Einfedern der Luftfeder ein unbeabsichtigtes Öffnen des Wegeventils verursachen können.

Dies bedingt jedoch, daß zum Öffnen des Sitzventils durch die elektrische Betätigungseinrichtung eine Kraft aufzubringen ist, mit der ein maximaler Schließdruck, entsprechend eines maximalen Luftfederdruckes, zuzüglich der Kraft einer üblicherweise vorhandenen Ventilschließfeder, überwunden werden muß. Es ist allgemein bekannt, daß bei Einrichtungen der vorerwähnten Art ein schnelles Ansprechen bei Niveauregelungen nur über ein entsprechendes Durchlaßvermögen des erwähnten Sitzventils zu erreichen ist. Die Erweiterung des Durchlaßquerschnittes des Sitzventils hat jedoch insofern seine Grenzen, als mit der Erweiterung auch die zum Öffnen des Sitzventils benötigte Kraft überproportional ansteigt. Dies führt in nachteiliger Weise zu relativ großen Bauteilen der elektrischen Betätigungseinrichtung des Ventils.

Der Erfindung liegt daher die Aufgabe zugrunde, eine Einrichtung der eingangs genannten Art so zu verbessern, daß im Vergleich mit der eingangs erwähnten Einrichtung die von der elektrischen Betätigungseinrichtung zu erbringende Kraft zum Öffnen des Sitzventils weitgehend unabhängig von dem das Sitzventil belastenden Schließdruck zu gestalten, so daß die Bauteile der elektrischen Betätigungseinrichtung des Sitzventils kleinvolumig und dessen Durchlaßquerschnitt relativ groß ausgebildet werden können.

Die Erfindung hat den Vorteil, daß durch eine kleinvolumige Ausbildung der elektrischen Betätigungseinrichtung eine Gewichtsreduzierung und eine günstigere Ausnutzung des am Fahrzeug für das Wegeventil zur Verfügung stehenden engen Bauraumes möglich ist.

Die Erfindung wird anhand eines Ausführungsbeispiels, das in der Zeichnung dargestellt ist, näher erläutert.

Es zeigen:
- **Fig.1**: eine Niveauregeleinrichtung mit einem als Sitzventil ausgebildeten Wegeventil zum Füllen und Entleeren einer Luftfeder,
- **Fig.2**: eine Einrichtung gemäß Fig.1, zusätzlich mit einem Druckschalter.

Die Einrichtung ist dafür vorgesehen, beladungsbedingten Niveauabweichungen oder gewollten Sollniveauveränderungen durch Füllen oder Entleeren der Luftfederung auszugleichen.

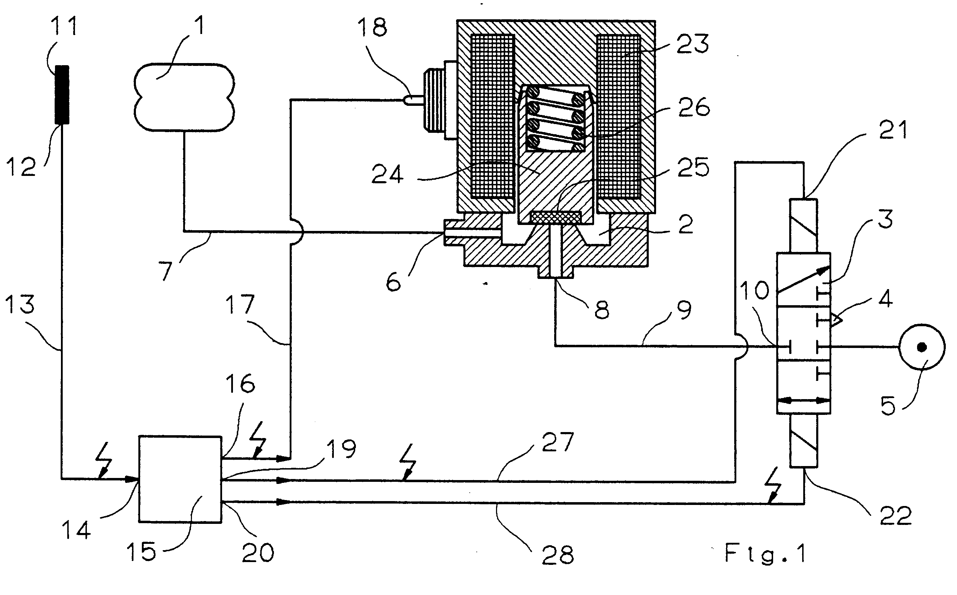

Die Fig.1 zeigt eine Luftfederung, die stellvertretend durch nur eine Luftfeder (1) dargestellt ist, welche wahlweise über eine steuerbare Ventileinrichtung (2, 3) mit einem Auslaß (4) zur Atmosphäre, oder mit einer Druckmittelquelle (5), verbindbar, oder gegenüber der Atmosphäre und der Druckmittelquelle (5) absperrbar ist.

Die Ventileinrichtung (2, 3) weist ein als Luftfederventil dienendes erstes Wegeventil (2) auf, mit einem ersten pneumatischen Anschluß (6) der über eine erste Druckleitung (7) mit der Luftfeder (1) verbunden ist. Ein zweiter pneumatischer Anschluß (8) ist über eine zweite Druckleitung (9) mit einem ersten pneumatischen Anschluß (10) des zweiten Wegeventils (3) verbunden. Der Anschluß (10) kann von der in der Zeichnung dargestellten Sperrstellung heraus durch das Wegeventil (3) mit der Druckmittelquelle (5) oder mit dem Auslaß (4) zur Atmosphäre verbunden werden.

Zum Messen des Abstandes zwischen der Fahrzeugzelle und der Fahrzeugachse ist eine Wegmeßeinrichtung (11) vorgesehen, mit einem Signalausgang (12), der über eine elektrische Leitung (13) mit einem ersten Signaleingang (14) einer elektronischen Steuereinrichtung (15) verbunden ist. Der erste Signaleingang (14) kann auch aus mehreren mit elektrischen Leitungen (13) verbundenen Signaleingängen gebildet sein. Die elektronische Steuereinrichtung (15) weist einen elektrischen Steuerausgang (16) auf, der über eine elektrische Leitung (17) mit einem elektrischen Steuereingang (18) des ersten Wegeventils (2) verbunden ist. Die elektronische Steuereinrichtung (15) weist weitere elektrische Steuerausgänge (19) und (20) auf, die über elektrische Leitungen (27) und (28) mit elektrischen Steuereingängen (21) und (22) des zweiten Wegeventils (3) verbunden sind.

Das Wegeventil (2) weist eine als Magnetventil ausgebildete elektrische Betätigungseinrichtung (23) auf, mit der ein Sitzventil (24, 25), das aus einem Ventilkörper (24) und einem Ventilsitz (25) gebildet ist, in die Offenstellung bewegbar ist. Das Sitzventil (24, 25) wird durch den in Schließrichtung auf den Ventilkörper (24) wirkenden Druck der Luftfeder (1) und die Kraft einer Ventilschließfeder (26) in der Schließstellung gehalten.

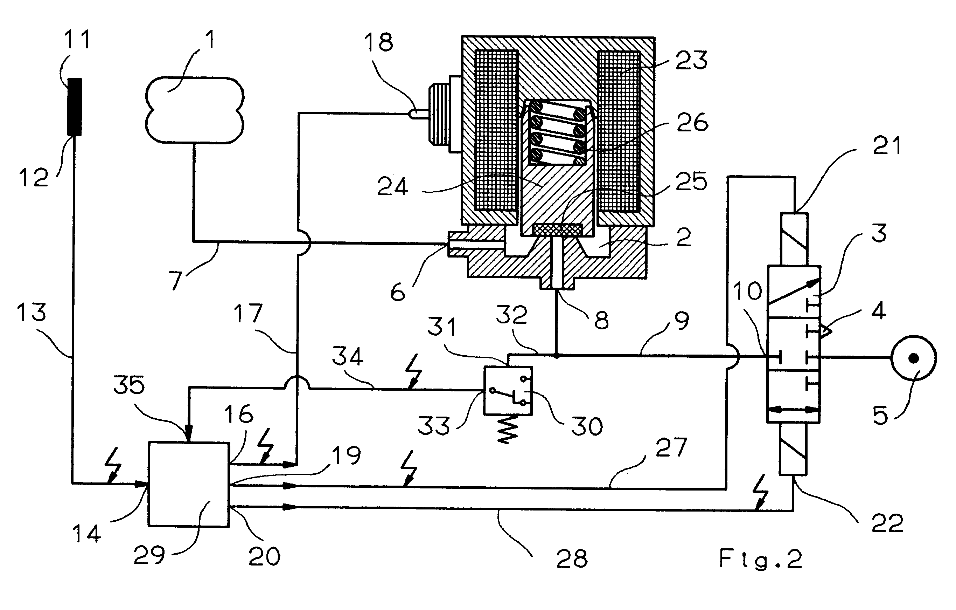

Gleiche Einrichtungsgegenstände der Figuren 1 und 2 sind mit gleichen Positionszeichen versehen.

Die Fig.2 zeigt, zusätzlich zu der Einrichtung gemäß Fig.1, einen Druckschalter (30), der über einen pneumatischen Anschluß (31) und einer Druckleitung (32) mit der Druckleitung (9) verbunden ist. Der Druckschalter (30) hat einen elektrischen Signalausgang (33) der über eine elektrische Leitung (34) mit einem zweiten elektrischen Signaleingang (35) einer elektrischen Steuereinrichtung (29) verbunden ist.

In der Einrichtung gemäß Fig.2 hat der Sensor (11) nur die Aufgabe die Niveaulage zu erkennen, während für die Information ob eine Druckunterstützung durch den Hilfsdruck erforderlich ist, der Druckschalter (30) zuständig ist.

Die Wirkungsweise der Einrichtung gemäß Fig.1 ist wie folgt:

### Niveau heben:

Ein beladungsbedingtes Einfedern der Luftfeder (1) hat zur Folge, daß die Fahrzeugzelle auf ein Niveau abgesenkt wird, daß unterhalb eines vorgegebenen Sollniveaus liegt. Die Wegmeßeinrichtung (11) registriert diese Niveauveränderung, die über den ersten Signaleingang (14) der elektronischen Steuereinrichtung (15) zugeführt wird. Die Vergleichseinrichtung der elektrischen Steuereinrichtung (15) erkennt durch Vergleich des Ausgangssignals der Wegmeßeinrichtung (11) mit dem gespeicherten Sollniveau, daß eine Niveauveränderung gegeben ist, die durch Füllen der Luftfeder (1) auf das Sollniveau zurückzuführen ist. Durch entsprechende Steuersignale an den Steuerausgängen (19) und (20) der elektronischen Steuereinrichtung (15) wird das Wegeventil (3) in eine Schaltstellung bewegt, in der der Anschluß (8) des Wegeventils (2) mit der Druckmittelquelle (5) verbunden ist.

Gleichzeitig wird durch ein Steuersignal am Steuerausgang (16) der elektronischen Steuereinrichtung (15) über den Steuereingang (18) die elektrische Betätigungseinrichtung des Wegeventils (2) aktiviert, wodurch der Ventilkörper (24) mit Unterstützung des auf ihn in Öffnungsrichtung des Sitzventils (24, 25) wirkenden Druckes der Druckmittelquelle (5) von dem Ventilsitz (25) abgehoben wird. Die Luftfeder ist nunmehr über die Druckleitungen (7) und (9) so lange mit der Druckmittelquelle (5) verbunden, bis die Fahrzeugzelle durch Füllen der Luftfeder (1) das Sollniveau erreicht hat. Danach werden von der elektronischen Steuereinrichtung (15) die Wegeventile (2) und (3) wieder in die Sperrstellung zurückgeschaltet.

### Niveau senken:

Durch Entladen der Fahrzeugzelle wird diese auf ein Niveau angehoben, das oberhalb des vorgegebenen Sollniveaus liegt. Zum Absenken auf das Sollniveau wäre ein Entlüften der Luftfeder (1) erforderlich.

Es wird vorausgesetzt, daß die elektrische Betätigungseinrichtung (23) hinsichtlich ihrer Baugröße so beschaffen ist, daß ein Öffnen des Sitzventils (24, 25) nur möglich ist, wenn in Öffnungsrichtung des Sitzventils (24, 25) auf den Ventilkörper (24) ein Hilfsdruck zur Unterstützung der Öffnungskraft der elektrischen Betätigungseinrichtung (23) wirksam ist. Es wird weiterhin vorausgesetzt, daß ein solcher Hilfsdruck bei Beginn des Entlüftungsvorganges nicht vorhanden ist.

Nachdem die Vergleichschaltung der elektrischen Steuereinrichtung (15) durch ein erstes Ausgangssignal der Niveaumeßeinrichtung (11) erkannt hat, daß die Luftfeder (1) zwecks Herstellung des Sollniveaus zu entleeren ist, wird das Wegeventil (3) so geschaltet, daß die Druckleitung (9) mit dem Auslaß (4) zur Atmosphäre verbunden ist. Gleichzeitig oder in vorteilhafter Weise dem Schalten des Wegeventils (3) voreilend, wird die elektrische Betätigungseinrichtung (23) des Wegeventils (2) aktiviert, um das Sitzventil (24, 25) zu öffnen. Der auf den Ventilkörper (24} in Schließrichtung des Sitzventils (24, 25) wirkende Druck der Luftfeder (1) verhindert jedoch ein Öffnen des Sitzventils (24, 25). Hierdurch kann ein zweites Signal der Niveaumeßeinrichtung (11), das einer Niveauänderung, bzw. einer Änderung des ersten Signals entsprechen würde, nicht erfolgen, da wegen des nicht geöffneten Sitzventils (24, 25) eine Niveauänderung nicht stattfinden kann.

Bei Auftreten des ersten Signals und Ausbleiben des zweiten Signals veranlaßt die elektronische Steuereinrichtung (15) das Wegeventil (3) eine Schaltstellung einzunehmen, in der die Druckmittelquelle (5) über die Druckleitung (9) mit dem zweiten Anschluß (8) des Wegeventils (2) verbunden ist. Hierdurch wird der Ventilkörper (24) gegen den Druck der Luftfeder (1) und der Kraft der Ventilfeder (26) mit einem Hilfsdruck zur Unterstützung der elektrischen Betätigungseinrichtung (23) zum Öffnen des Sitzventils (24, 25) beaufschlagt.

Der Ventilkörper (24) könnte auch über einen anderen, nicht dargestellten Anschluß des Wegeventils (2) mit dem Hilfsdruck beaufschlagt werden. Die zu beaufschlagende Fläche des Ventilkörpers (24) wäre dann z.B. als Ringfläche ausgebildet, die eine Druckkammer des Wegeventils (2) abschließen würde.

Das Öffnen des Sitzventils (24, 25) wird von der Niveaumeßeinrichtung (11) z.B. durch Differenzbildung eines das vorhandene Niveau wiedergebenden Signals als Niveauänderung erkannt und als zweites Signal der elektrischen Steuereinrichtung (15) zugeleitet. Die elektrische Steuereinrichtung (15) veranlaßt daraufhin das Wegeventil (3) eine Schaltstellung einzunehmen in der die Luftfeder (1) über die Leitungen (7) und (9) und über das geöffnete Wegeventil (2) mit dem Auslaß (4) zur Atmosphäre verbunden ist. Bei Erreichen des Sollniveaus werden die Wegeventile (2) und (3) der elektrischen Steuereinrichtung (15) wieder in die Sperrstellung zurückgeschaltet.

Das Auftreten des ersten Signals und damit in Verbindung das Auftreten des zweiten Signals bedeutet, daß nach vorangegangenem Niveauregelvorgang ein Hilfsdruck in der Druckleitung (9) geblieben ist. Ein Öffnen des Sitzventils (24, 25) im Sinne des vorerwähnten Zuschaltens der Druckmittelquelle (5) vor dem Entleeren der Luftfeder (1) erfolgt daher nicht.

Die Wirkungsweise der Einrichtung gemäß Fig.2 ist wie folgt:

Das Anheben der Fahrzeugzelle auf das Sollniveau erfolgt so, wie es unter der Wirkungsweise der Einrichtung gemäß Fig.1 beschrieben ist.

### Niveau senken:

Mit der Einrichtung gemäß Fig.2 wird berücksichtigt, daß nach Beendigung eines Niveauänderungsvorganges in der Druckleitung (9) ein Restdruck vorhanden sein kann, der auch der Druckhöhe des Hilfsdruckes entsprechen könnte. Der dem Hilfsdruck entsprechende Restdruck in der Druckleitung (9) bewirkt ein Schließen des Druckschalters (30). Durch ein dem entsprechendes elektrisches Signal, das vom Druckschalter (30) über den Signalausgang (33) und den zweiten Signaleingang (35) der elektrischen Steuereinrichtung (29) übermittelt wird, erkennt die elektrische Steuereinrichtung (29) das Vorhandensein des zum Öffnen des Sitzventils (24, 25) erforderlichen Hilfsdruckes, so daß ein in diesem Falle unnötiges Umschalten des Wegeventils (3) auf die Druckmittelquelle (5), zur Erzeugung des Hilfsdruckes, verhindert wird. Bei Ausbleiben des elektrischen Signals des Druckschalters (30) registriert die elektrische Steuereinrichtung (29), daß kein Hilfsdruck vorhanden ist. Als Folge davon erfolgt die Beaufschlagung des Ventilkörpers (24) mit dem Hilfsdruck durch Zuschalten der Druckmittelquelle (5).

Es ist auch denkbar, daß das Wegeventil (3) nach Zuschalten der Druckmittelquelle (5) zur Erzeugung des Hilfsdruckes mit einer zeitlichen Vorgabe geöffnet bleibt, wobei die Öffnungszeit so zu wählen ist, daß mit Sicherheit der Hilfsdruck zum Öffnen des Sitzventils (24, 25) in der Druckleitung (9) hergestellt ist. Danach würde sich dann das Wegeventil (3) zum Entleeren der Luftfeder (1) in eine Schaltstellung bewegen, in der der Auslaß (8) mit dem Auslaß (4) zur Atmosphäre verbunden ist.

Das in der elektronischen Steuereinrichtung ((15) in Fig.1 und (29) in Fig.2) gespeicherte Sollniveau kann auch veränderbar sein, so daß eine willkürliche Veränderung des Niveaus der Fahrzeugzelle erfolgen könnte.

## Patentansprüche

1. Niveauregeleinrichtung für Fahrzeuge mit Luftfedern (1), durch die eine Fahrzeugzelle gegenüber mindestens einer Fahrzeugachse abgefedert ist, mit folgenden Merkmalen:
a) es ist eine Niveaumeßeinrichtung (11) vorgesehen, deren Ausgangssignal dem Abstand der Fahrzeugzelle von der Fahrzeugachse entspricht;
b) es ist eine elektrische Steuereinrichtung (15,29) vorgesehen, mit gespeichertem Sollniveau und einer Vergleichseinrichtung, die zum Vergleich des Ausgangssignals der Niveaumeßeinrichtung (11) mit dem Sollniveau dient;
c) es ist eine mit Steuerausgangssignalen der elektronischen Steuereinrichtung elektrisch betätigbare Ventileinrichtung (2,3) vorgesehen, mit der die Luftfedern (1) zum Auffüllen mit einer Druckmittelquelle (5) und zum Entleeren mit einem Auslaß (4) zur Atmosphäre verbindbar sind;
d) die Ventileinrichtung (2,3) weist einen ersten pneumatischen Anschluß (6) auf, der mit dem Druck der Luftfeder (1) beaufschlagt ist;
e) die Ventileinrichtung (2,3) weist einen zweiten pneumatischen Anschluß (8) auf, der mit dem Druck der Druckmittelquelle (5) beaufschlagbar und mit einem Auslaß (4) zur Atmosphäre verbindbar ist;
gekennzeichnet durch die folgenden Merkmale:
f) die Ventileinrichtung (2,3) weist ein als Steuerventil ausgebildetes erstes Wegeventil (2) in der Art eines Rückschlagventils auf, mit einem Ventilkörper (24) und einem Ventilsitz (25), wobei der Ventilkörper (24) in Schließrichtung auf den Ventilsitz (25) mit dem Druck der Luftfeder (1) und der Kraft einer Ventilschließfeder (26) beaufschlagt und in Öffnungsrichtung von der elektrischen Betätigungseinrichtung (23) von dem Ventilsitz (25) abhebbar ist;
g) zum Entleeren der Luftfeder (1) ist der Ventilkörper (24), entgegen dem Druck der Luftfeder (1) und der Kraft der Ventilschließfeder (26), mit einem Hilfsdruck zur Unterstützung der elektrischen Betätigungseinrichtung (23) zum Öffnen des Sitzventils (24, 25) beaufschlagbar;
h) die Beaufschlagung des Sitzventils (24, 25) mit dem Hilfsdruck ist durch ein durch das Öffnen des Sitzventils (24, 25) erzeugbares elektrisches Signal aufhebbar.

2. Niveauregeleinrichtung nach Anspruch 1, dadurch gekennzeichnet, daß der Ventilkörper (24) durch eine Verbindung des zweiten pneumatischen Anschlusses (8) der Ventileinrichtung (2, 3) mit der Druckmittelquelle (5) mit dem Hilfsdruck beaufschlagbar ist.

3. Niveauregeleinrichtung nach Anspruch 1 oder 2, gekennzeichnet durch folgende Merkmale:
a) die Beaufschlagung des Ventilkörpers (24) mit dem Hilfsdruck ist durch ein der elektrischen Steuereinrichtung (15) über einen ersten Signaleingang (14) zuführbares erstes Ausgangssignal der Niveaumeßeinrichtung (11), das einer Niveauhöhe oberhalb des Sollniveaus entspricht, auslösbar;
b) die Beaufschlagung des Ventilkörpers (24) mit dem Hilfsdruck ist durch das erste Ausgangssignal der Niveaumeßeinrichtung (11) und ein der elektrischen Steuereinrichtung (15) über den ersten elektrischen Signaleingang (14) zuführbares zweites Ausgangssignal der Niveaumeßeinrichtung (11), das einer Veränderung des ersten Ausgangssignals der Niveaumeßeinrichtung (11) entspricht, aufhebbar.

4. Niveauregeleinrichtung nach Anspruch 3, gekennzeichnet durch folgende Merkmale:
a) es ist eine elektronische Steuereinrichtung (29) vorgesehen, die den ersten Signaleingang (14) und einen zweiten elektrischen Signaleingang (35) aufweist, über den der elektrischen Steuereinrichtung (29) ein elektrisches Signal zuführbar ist, das durch einen dem Hilfsdruck entsprechenden Druck am zweiten Anschluß (8) des ersten Wegeventils (2) auslösbar ist;
b) die Beaufschlagung des Ventilkörpers (24) mit dem Hilfsdruck ist auslösbar wenn am ersten Signaleingang (14) der elektronischen Steuereinrichtung (29) das erste Ausgangssignal der Niveaumeßeinrichtung (11) und am zweiten Signaleingang (35) kein Signal ansteht.

5. Niveauregeleinrichtung nach Anspruch 4, gekennzeichnet durch folgende Merkmale:
a) es ist ein mit einem dem Druck des zweiten Anschlusses (8) des ersten Wegeventils (2) entsprechenden Druck beaufschlagbarer Druckschalter (30) vorgesehen;
b) der Druckschalter (30) weist einen elektrischen Signalausgang (33) auf, an dem durch einen dem Hilfsdruck entsprechenden Druck am zweiten Anschluß (8) des ersten Wegeventils (2) ein elektrisches Signal erzeugbar ist;
c) der elektrische Signalausgang (33) des Druckschalters (30) ist über eine elektrische Leitung (34) mit dem zweiten Signaleingang (35) der elektronischen Steuereinrichtung (29) verbunden.

6. Niveauregeleinrichtung nach Anspruch 3, dadurch gekennzeichnet, daß das zweite Ausgangssignal der Niveaumeßeinrichtung (11) zum Erkennen des Schaltzustandes des Sitzventils (24, 25) dient.

## Claims

1. Ride level control device for vehicles with pneumatic springs (1), by means of which a vehicle cell is sprung with respect to at least one vehicle axle, having the following features:
a) a ride level measuring device (11) is provided, the output signal of which corresponds to the distance between the vehicle cell and the vehicle axle;
b) an electrical control device (15, 29) is provided, with stored nominal level and a comparison device which serves to compare the output signal of the ride level measuring device (11) with the nominal level;
c) a valve device (2, 3) is provided which is arranged to be electrically actuated by control output signals of the electronic control device, and with which the pneumatic springs (1) can be connected to a pressure medium source (5) for filling and to an outlet (4) to the atmosphere for emptying;
d) the valve device (2, 3) has a first pneumatic connection (6) to which the pressure of the pneumatic spring (1) is supplied;
e) the valve device (2, 3) has a second pneumatic connection (8) to which the pressure of the pressure medium source (5) can be supplied and which can be connected to an outlet (4) to the atmosphere;
characterised by the following features:
f) the valve device (2, 3) has, in the form of a control valve, afirst directional control valve (2), of the non-return valve type, with a valve body (24) and a valve seat (25), the valve body (24) being acted on in the closing direction onto the valve seat (25) by the pressure of the pneumatic spring (1) and the force of a valve closure spring (26), and arranged to be lifted away from the valve seat (25) in the opening direction by the electrical actuating device (23);
g) for emptying the pneumatic spring (1), the valve body (24) is arranged to be supplied, opposing the pressure of the pneumatic spring (1) and the force of the valve closure spring (26), with an auxiliary pressure to assist the electrical actuating device (23) to open the seat valve (24, 25);
h) the supply of the auxiliary pressure to the seat valve (24, 25) can be blocked by means of an electrical signal that can be produced by the opening of the seat valve (24, 25).

2. Ride level control device according to Claim 1, characterised in that the valve body (24) is arranged to be supplied with the auxiliary pressure by connection of the second pneumatic connection (8) of the valve device (2, 3) to the pressure medium source (5).

3. Ride level control device according to Claim 1 or 2, characterised by the following features:
a) the supply of the auxiliary pressure to the valve body (24) can be initiated by means of a first output signal of the ride level measuring device (11) which can be fed to the electrical control device (15) by way of a first signal input (14) and which corresponds to a level higher than the nominal level;
b) the supply of the auxiliary pressure to the valve body (24) can be blocked by means of the first output signal of the ride level measuring device (11) and a second output signal of the ride level measuring device (11) which can be fed to the electrical control device (15) by way of the first electrical signal input (14) and which corresponds to an alteration in the first output signal of the ride level measuring device (11).

4. Ride level control device according to Claim 3, characterised by the following features:
a) an electronic control device (29) is provided which has the first signal input (14) and a second electrical signal input (35) by way of which there can be fed to the electrical control device (29) an electrical signal which can be initiated by means of a pressure at the second connection (8) of the first directional control valve (2) that corresponds to the auxiliary pressure;
b) the supply of the auxiliary pressure to the valve body (24) can be initiated when the first output signal of the ride level measuring device (11) is present at the first signal input (14) of the electronic control device (29), and there is no signal at the second signal input (35).

5. Ride level control device according to Claim 4, characterised by the following features:
a) a pressure switch (30) is provided which can be acted on by a pressure corresponding to the pressure of the second connection (8) of the first directional control valve (2).
b) the pressure switch (30) has an electrical signal output (33) at which an electrical signal can be produced by means of a pressure at the second connection (8) of the first directional control valve (2) that corresponds to the auxiliary pressure;
c) the electrical signal output (33) of the pressure switch (30) is connected by way of an electrical line (34) to the second signal input (35) of the electronic control device (29).

6. Ride level control device according to Claim 3, characterised in that the second output signal of the ride level measuring device (11) serves for the recognition of the switched state of the seat valve (24, 25).

## Revendications

1. Dispositif de réglage de niveau pour véhicules comportant des ressorts pneumatiques (1), par lesquels une cellule de véhicule est suspendue par rapport à au moins un essieu de véhicule, ayant les particularités suivantes:
a) on a prévu un capteur de niveau (11) dont le signal de sortie correspond à la distance qui sépare la cellule de véhicule de l'essieu de véhicule;
b) on a prévu un dispositif de commande électrique (15, 19) dans lequel est mémorisé un niveau de consigne et qui comporte un dispositif de comparaison servant à comparer le signal de sortie du capteur de niveau (11) avec le niveau de consigne;
c) on a prévu un système de distribution (2, 3) manoeuvrable électriquement par des signaux de sortie de commande du dispositif de commande électronique, qui est capable de relier les ressorts pneumatique (1) à une source de fluide de pression (5) pour le remplissage et à une sortie (4) débouchant à l'atmosphère pour la détente des ressorts pneumatiques (1);
d) le système de distribution (2, 3) présente un premier raccord pneumatique (6) auquel est appliquée la pression des ressorts pneumatiques (1); et
e) le système de distribution (2, 3) présente un deuxième raccord pneumatique (8) auquel peut être appliquée la pression de la source de fluide de pression (5) et qui peut être relié à une sortie (4) débouchant à l'atmosphère;
caractérisé en ce que:
f) le système de distribution (2, 3) comprend un premier distributeur (2), réalisé comme une soupape de commande, agissant à la façon d'une soupape antiretour et comportant un clapet (24) et un siège de soupape (25), le clapet (24) étant chargé en direction du siège (25), dans le sens de la fermeture, par la pression des ressorts pneumatiques (1) et la force d'un ressort de fermeture de soupape (26), et pouvant être levé du siège (25), dans le sens de l'ouverture, par un dispositif de manoeuvre électrique (23);
g) pour la détente des ressorts pneumatiques (1), le clapet (24) peut être chargé, à l'encontre de la pression des ressorts pneumatiques (1) et de la force du ressort de fermeture de soupape (26), par une pression auxiliaire servant à soutenir le dispositif de manoeuvre électrique (23) dans l'ouverture de la soupape à siège (24, 25); et
h) l'application de la pression auxiliaire à la soupape à siège (24, 25) peut être supprimée par un signal électrique susceptible d'être généré par l'ouverture de la soupape à siège (24, 25).

2. Dispositif de réglage de niveau selon la revendication 1, caractérisé en ce que la pression auxiliaire est applicable au clapet (24) à travers une liaison allant du deuxième raccord pneumatique (8) du système de distribution (2, 3) à la source de fluide de pression (5).

3. Dispositif de réglage de niveau selon la revendication 1 ou 2, caractérisé en ce que:
a) l'application de la pression auxiliaire au clapet (24) est déclenchable par un premier signal de sortie du capteur de niveau (11), correspondant à une hauteur de niveau au-dessus du niveau de consigne et pouvant être transmis à travers une première entrée de signal (14) au dispositif de commande électrique (15); et
b) l'application de la pression auxiliaire au clapet (24) est supprimable par le premier signal de sortie du capteur de niveau (11) et un deuxième signal de sortie du capteur de niveau (11) qui correspond à un changement du premier signal de sortie de ce capteur (11) et peut être transmis à travers la première entrée de signal électrique (14) au dispositif de commande électrique (15).

4. Dispositif de réglage de niveau selon la revendication 3, caractérisé en ce que:
a) on a prévu un dispositif de commande électronique (29) qui présente la première entrée de signal (14) et une deuxième entrée de signal électrique (35), par laquelle peut être transmis au dispositif de commande électrique (29) un signal électrique déclenchable par une pression correspondant à la présence de la pression auxiliaire sur le deuxième raccord (8) du premier distributeur 52); et
b) l'application de la pression auxiliaire au clapet (24) est déclenchable lorsque le premier signal de sortie du capteur de niveau (11) est appliqué à la première entrée de signal (14) du dispositif de commande électronique (29) et qu'aucun signal n'est appliqué à la deuxième entrée de signal (35).

5. Dispositif de réglage de niveau selon la revendication 4, caractérisé en ce que:
a) on a prévu un interrupteur manométrique (30) auquel est applicable une pression correspondant à la pression sur le deuxième raccord (8) du premier distributeur;
b) l'interrupteur manométrique (30) possède une sortie de signal électrique (33), sur laquelle peut être produit un signal électrique par une pression correspondant à la pression auxiliaire sur le deuxième raccord (8) du premier distributeur (2); et
c) la sortie de signal électrique (33) de l'interrupteur manométrique (30) est connectée par une ligne électrique (34) à la deuxième entrée de signal (35) du dispositif de commande électronique (29).

6. Dispositif de réglage de niveau selon la revendication 3, caractérisé en ce que le deuxième signal de sortie du capteur de niveau (11) sert à détecter la position de la soupape à siège (24, 25).
